# DEMANDE DE BREVET EUROPEEN

(11) **EP 3 450 718 A1**
(43) Date de publication de la demande: **06.03.2019**
(21) Numéro de dépôt: 18192078.6
(22) Date de dépôt: 31.08.2018
(51) Int. Cl.: F02B 33/36, F02B 37/04, F02B 39/04, F02B 39/10, F02M 26/05, F02M 26/06, F02M 26/08, F02M 26/34, F01N 5/04

(54) **SYSTEME D'ALIMENTATION EN GAZ POUR UN MOTEUR À COMBUSTION INTERNE**

(30) Priorité: 01.09.2017 FR 1758095
(71) Demandeur: Valeo Systèmes de Contrôle Moteur, 95892 Cergy Pontoise Cedex (FR)
(72) Inventeur: CHICOT, Julien, 95892 CERGY PONTOISE (FR); COPPIN, Thomas, 95892 CERGY PONTOISE (FR); MENDES, Gaël, 95892 CERGY PONTOISE (FR); SABRIE, Julien, 95892 CERGY PONTOISE (FR)
(74) Mandataire: Cardon, Nicolas

(57) **Abrégé**

Un système d'alimentation (2A) en gaz pour un moteur à combustion interne (26) comprend un ensemble d'apport et de récupération d'énergie formé d'un compresseur volumétrique (4) et d'une machine d'entraînement réversible (6).

La machine d'entraînement réversible (6) est configurée pour, dans un premier mode de fonctionnement, actionner le compresseur volumétrique (4) afin d'augmenter la pression d'un gaz présent dans le système d'alimentation (2A) et pour, dans un second mode de fonctionnement, convertir l'énergie du compresseur volumétrique (4) acquise par la détente d'un gaz présent dans le système d'alimentation (2A).

## Description

La présente demande concerne le domaine technique des moteurs à combustion interne, et plus particulièrement les moteurs à combustion interne équipés d'un système d'alimentation en gaz de type conduit d'admission ou conduit de recirculation des gaz d'échappement.

Afin de limiter les émissions d'oxydes d'azote, il est connu l'utilisation d'un circuit de recirculation des gaz d'échappement permettant de réinjecter dans le moteur une partie des gaz d'échappement. On utilise pour cela un conduit de recirculation des gaz d'échappement, connu notamment sous l'acronyme de conduit EGR pour «Exhaust Gas Recirculation », reliant le conduit d'échappement au conduit d'admission du moteur. La quantité de gaz d'échappement réinjectée dans le conduit d'admission est contrôlée par l'intermédiaire d'une vanne dédiée, appelée couramment vanne EGR.

Il est connu d'équiper un tel conduit EGR d'une machine électrique, par exemple un compresseur ou une turbine. Si la différence de pression entre l'entrée et la sortie du conduit EGR est supérieure à la différence de pression nécessaire pour faire circuler les gaz dans ce conduit EGR, il est possible de récupérer de l'énergie avec une turbine de récupération d'énergie. Dans le cas contraire, un compresseur permet de faire circuler les gaz au débit souhaité.

L'utilisation d'un compresseur et d'une turbine permet avantageusement d'optimiser le fonctionnement du circuit de recirculation tout en permettant de récupérer une partie de l'énergie des gaz circulant dans ledit circuit.

Il est pour cela nécessaire d'utiliser deux dispositifs distincts, un compresseur et une turbine, tous deux montés sur le même conduit de recirculation. Cette solution bien qu'avantageuse présente l'inconvénient d'être coûteuse en termes de composants et difficilement intégrable sur des moteurs à combustion interne compacts, équipant la majorité des véhicules automobiles produits actuellement.

L'invention s'inscrit dans ce contexte en proposant un système d'alimentation en gaz pour un moteur à combustion interne, comprenant un ensemble d'apport et de récupération d'énergie formé d'un compresseur volumétrique et d'une machine d'entraînement réversible, la machine d'entraînement réversible étant configurée pour, dans un premier mode de fonctionnement, actionner le compresseur volumétrique afin d'augmenter la pression d'un gaz s'écoulant dans le système d'alimentation et pour, dans un second mode de fonctionnement, convertir l'énergie du compresseur volumétrique acquise par la détente d'un gaz présent dans le système d'alimentation.

En d'autres termes, la machine d'entraînement réversible est configurée pour faire fonctionner le compresseur volumétrique de manière à compresser un gaz circulant dans ladite conduite ou bien récupérer l'énergie dudit gaz par l'intermédiaire du compresseur volumétrique. Il est dès lors possible d'augmenter de façon contrôlée le débit des gaz circulant dans le système d'alimentation et donc indirectement dans le moteur.

Le couplage de la machine volumétrique à une machine d'entraînement réversible est particulièrement avantageux car il offre une grande flexibilité dans le choix du régime de fonctionnement du compresseur volumétrique, ce qui permet d'atteindre le ou les points de fonctionnement s'adaptant au mieux à chaque moteur à combustion interne et à chaque point de fonctionnement du moteur.

L'utilisation d'une machine volumétrique permet, à la différence d'un compresseur centrifuge et d'une turbine, de couvrir un champ de débit-pression très étendu. Cela permet une adaptation optimale au débit traversant la conduite d'alimentation et aux pressions d'entrée et de sortie de la conduite d'alimentation. Ainsi dans le second mode de fonctionnement la récupération d'énergie est optimale. Dans le premier mode de fonctionnement il est possible d'atteindre des conditions de pression et débit non réalisables par un compresseur centrifuge. Ainsi la consommation et/ou les émissions polluantes peuvent être réduites et/ou les performances dynamiques du moteur augmentées.

L'ensemble d'apport et de récupération d'énergie, formé selon l'invention du compresseur volumétrique et de la machine d'entraînement réversible, joue le rôle du compresseur et de la turbine décrits ci-dessus, avec une zone unique de raccordement sur une conduite d'alimentation du moteur à combustion interne, que celle-ci soit une conduite d'admission ou une conduite de recirculation des gaz d'échappement. De façon avantageuse, l'invention propose de diminuer le nombre de composants mis en oeuvre pour réaliser ces fonctions d'apport et de récupération d'énergie, et de limiter leur raccordement en une zone unique, ce qui facilite d'une part l'intégration de l'ensemble d'apport et de récupération d'énergie dans des moteurs à combustion interne compacts et permet d'autre part de réduire le coût de mise en oeuvre de cette solution.

Selon un autre avantage, l'utilisation d'un compresseur volumétrique permet d'adresser un large champ de débits et de pressions à l'inverse, par exemple, d'une turbine qui a une caractéristique rapport de pression-débit très étroite. Ainsi, l'invention s'adapte au mieux aux conditions de fonctionnement d'un moteur à combustion interne pour optimiser la récupération d'énergie à partir des gaz s'écoulant dans le système d'alimentation, tout en s'assurant d'une alimentation suffisante en gaz du moteur à combustion interne.

Selon une caractéristique de l'invention, le système d'alimentation comprend une unité de commande contrôlant le fonctionnement de la machine d'entraînement réversible, l'unité de commande étant connectée à un ou plusieurs éléments de détection , de manière à mesurer un paramètre relatif au gaz présent dans le système d'alimentation équipé de l'ensemble d'apport et de récupération d'énergie. A titre d'exemple non limitatif, un élément de détection peut consister en un capteur de pression, notamment dans le cas où le compresseur volumétrique de l'ensemble d'apport et de récupération d'énergie est agencé sur le conduit d'admission. Lorsque le compresseur volumétrique est agencé sur un circuit de recirculation des gaz d'échappement, les éléments de détection pourraient consister en des moyens de mesure du débit des gaz recirculés EGR, notamment à l'admission d'air frais, et/ou en des moyens de mesure de la température et de la pression dans le collecteur d'admission, et/ou en des moyens de mesures annexes telles que le régime moteur par exemple.

Selon une caractéristique de l'invention, l'unité de commande est configurée pour commander la machine d'entraînement réversible en fonction de la comparaison d'un paramètre mesuré par le ou les éléments de détection, par exemple la pression dans la conduite d'admission mesurée par un capteur de pression, avec une valeur seuil, de manière à faire fonctionner le compresseur volumétrique dans le premier mode de fonctionnement.

Selon une caractéristique de réalisation, l'unité de commande intègre une unité de mémorisation d'au moins une valeur seuil, à laquelle est associé un état de fonctionnement spécifique du compresseur volumétrique. On pourra prévoir plusieurs valeurs seuils, dont le dépassement pourra permettre de choisir un état de fonctionnement particulier du compresseur volumétrique. Ces valeurs seuils peuvent dépendre du type de moteur à combustion interne et du type d'utilisation souhaité. Ces valeurs pourront être déterminées de façon empirique par l'homme du métier pour chaque type de moteur à combustion interne.

Selon une caractéristique de l'invention le système d'alimentation comprend une unité de commande contrôlant le fonctionnement de la machine d'entraînement réversible l'unité de commande étant connectée à un ou plusieurs éléments de détection, de manière à mesurer un paramètre relatif au gaz présent dans le système d'alimentation, l'unité de commande étant notamment configurée pour commander la machine d'entraînement réversible en fonction de la comparaison d'un paramètre mesuré par le ou les éléments de détection avec une valeur seuil, de manière à faire fonctionner le compresseur volumétrique dans le premier mode de fonctionnement, l'unité de commande intégrant de préférence une unité de mémorisation d'au moins une valeur seuil, à laquelle est associé un état de fonctionnement spécifique du compresseur volumétrique.

Selon une caractéristique de réalisation, l'unité de commande est configurée pour donner une instruction de commande du compresseur volumétrique de manière à empêcher la circulation d'un gaz dans le système d'alimentation. Autrement dit, l'invention peut également être configurée pour stopper le passage d'un gaz circulant dans le système d'alimentation. Ce mode de réalisation est particulièrement avantageux pour permettre au compresseur volumétrique de se substituer à une vanne EGR lorsque le système d'alimentation est utilisé comme conduit de recirculation des gaz d'échappement. Ce mode de réalisation est également avantageux pour permettre au compresseur volumétrique de se substituer à un boîtier papillon lorsque le système d'alimentation est utilisé comme conduit d'admission. Cette variante de réalisation permet donc de réduire les coûts de fabrication d'un circuit de recirculation ou d'un circuit d'admission, ainsi que leur encombrement pour réduire les contraintes liées à leur intégration dans un moteur à combustion interne compact.

Selon une caractéristique de réalisation, le système d'alimentation comprend une conduite de recirculation des gaz d'échappement pour moteur à combustion interne sur laquelle est agencé l'ensemble d'apport et de récupération d'énergie. Ainsi, le compresseur volumétrique joue à la fois le rôle du compresseur et de la turbine décrits ci-dessus, afin d'optimiser le fonctionnement d'un circuit de recirculation des gaz d'échappement tout en limitant les émissions d'oxydes d'azote d'un moteur à combustion interne.

Selon une caractéristique de réalisation, le système d'alimentation comprend une conduite d'admission des gaz pour moteur à combustion interne sur laquelle est agencé l'ensemble d'apport et de récupération d'énergie.

Selon une caractéristique de réalisation, le système d'alimentation comprend une conduite de recirculation des gaz d'échappement pour moteur à combustion interne sur laquelle est agencé un premier ensemble d'apport et de récupération d'énergie et le système d'alimentation comprend une conduite d'admission des gaz pour moteur à combustion interne sur laquelle est agencé un deuxième ensemble d'apport et de récupération d'énergie.

Selon une caractéristique de réalisation, la machine d'entraînement réversible est configurée pour fonctionner comme un moteur électrique dans le premier mode de fonctionnement, ou comme un générateur électrique dans le second mode de fonctionnement.

Selon une caractéristique de réalisation, la machine d'entraînement réversible est configurée pour fonctionner avec un système hydraulique ou pneumatique. On comprend que le choix du type d'énergie n'est pas limitatif de l'invention, et qu'il convient que la machine d'entraînement réversible puisse alimenter le compresseur volumétrique avec l'énergie choisie et qu'elle puisse restituer une telle énergie à un dispositif de stockage approprié.

La machine d'entraînement réversible peut être couplée au compresseur volumétrique par l'intermédiaire d'un réducteur. Le réducteur comporte un système d'engrenages configuré pour augmenter ou réduire la vitesse de fonctionnement du compresseur volumétrique.

Selon une caractéristique de réalisation, le compresseur volumétrique est à cylindrée variable ou fixe. De préférence, le compresseur volumétrique est à cylindrée fixe du fait de sa plus grande simplicité d'utilisation. Dans ce cas, la machine d'entraînement réversible est configurée pour pouvoir faire fonctionner le compresseur volumétrique à des vitesses de fonctionnement variées.

Selon une caractéristique de réalisation, le système d'alimentation comprend un circuit de dérivation permettant à au moins une partie des gaz circulant dans le système d'alimentation d'éviter le compresseur volumétrique, le circuit de dérivation comprenant une vanne permettant de contrôler le débit des gaz passant par le circuit de dérivation. Ce mode de réalisation permet d'améliorer la contrôlabilité ainsi que la plage de fonctionnement (débit, pression) du système d'alimentation.

Selon une caractéristique de réalisation, le système d'alimentation comprend une vanne en amont et/ou en aval du circuit de dérivation.

Selon une caractéristique de réalisation, le système d'alimentation comprend un circuit de dérivation permettant à au moins une partie des gaz circulant dans le système d'alimentation d'éviter le compresseur volumétrique, et une vanne de type 3 voies permettant de contrôler le débit des gaz passant par le compresseur volumétrique et/ou le circuit de dérivation.

L'utilisation des vannes mentionnées ci-dessus permet également de pallier d'éventuelles défaillances du compresseur volumétrique, ainsi que ses éventuelles limitations en puissance notamment dans les phases de récupération.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres.

L'invention a aussi trait à un moteur à combustion interne comprenant un système d'alimentation tel que décrit ci-dessus. Le moteur à combustion interne peut notamment être équipé d'un turbocompresseur.

L'invention porte aussi sur un véhicule automobile comprenant un moteur à combustion interne décrit ci-dessus.

Les caractéristiques de l'invention mentionnées ci-dessus ainsi que d'autres, apparaîtront plus clairement à la lecture ci-dessous de la description détaillée d'exemples non limitatifs, en se référant aux dessins annexés suivants :
- la figure 1 est une vue schématique d'un moteur thermique à combustion interne équipé d'un système d'alimentation selon un premier mode de réalisation de l'invention ;
- la figure 2 est une vue de détail du système d'alimentation de la figure 1 ;
- les figures 3 à 5 sont des vues similaires à celle de la figure 2, illustrant respectivement une première variante, une deuxième variante, une troisième variante et une quatrième variante du système d'alimentation selon l'invention ;

- la figure 6 est une vue schématique d'un moteur thermique à combustion interne équipé d'un système d'alimentation selon un deuxième mode de réalisation de l'invention ; et
- la figure 7 est une vue schématique d'un moteur thermique à combustion interne équipé d'un système d'alimentation selon un troisième mode de réalisation de l'invention.

Pour rappel, l'invention propose un système d'alimentation en gaz d'un moteur à combustion interne permettant d'optimiser le fonctionnement du moteur tout en étant moins coûteux et plus compact.

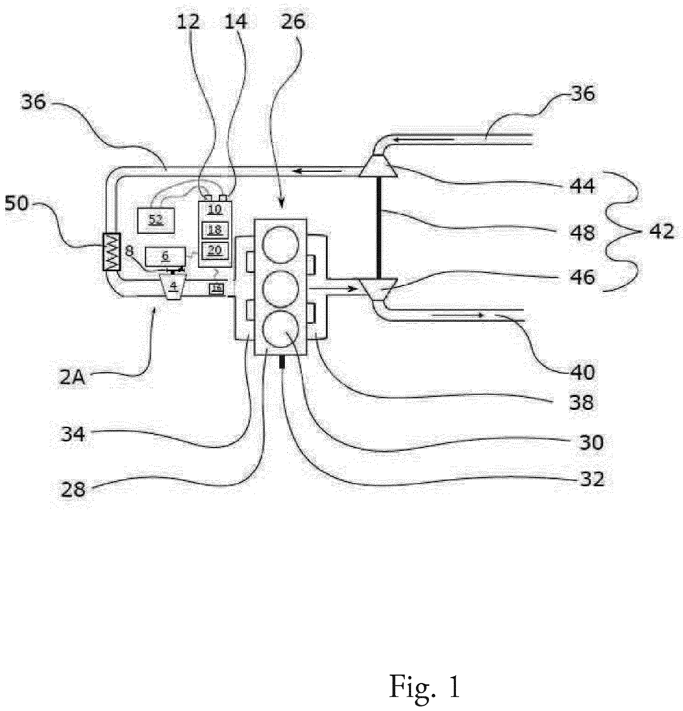

La figure 1 illustre un premier mode de réalisation dans lequel un moteur à combustion interne 26 comporte un système d'alimentation 2A dans lequel est agencé un ensemble d'apport et de récupération d'énergie.

Le moteur à combustion interne comporte un bloc-moteur 28 définissant des chambres de combustion 30 pourvues de pistons non représentés, entraînant en rotation un arbre de sortie 32. Les chambres de combustion 30 du bloc-moteur 28 sont raccordées via un répartiteur d'admission 34 à une conduite d'admission 36 de gaz et via un collecteur d'échappement 38 à une conduite d'échappement 40 des gaz brûlés lors de la combustion, ou gaz d'échappement.

Le moteur à combustion interne comprend ici un turbocompresseur 42 formé par la coopération d'un compresseur 44, disposé sur la conduite d'admission 36, et d'une turbine 46, placée sur la conduite d'échappement 40 de manière à récupérer une partie de l'énergie des gaz d'échappement et entraîner en rotation le compresseur 44. Notamment, le compresseur 44 et la turbine 46 peuvent être montés sur un arbre commun 48.

Dans l'exemple illustré, un échangeur de chaleur 50 est agencé sur la conduite d'admission 36, entre le compresseur 44 et le bloc-moteur 28, afin de refroidir la température des gaz d'admission et d'augmenter la densité de ceux-ci.

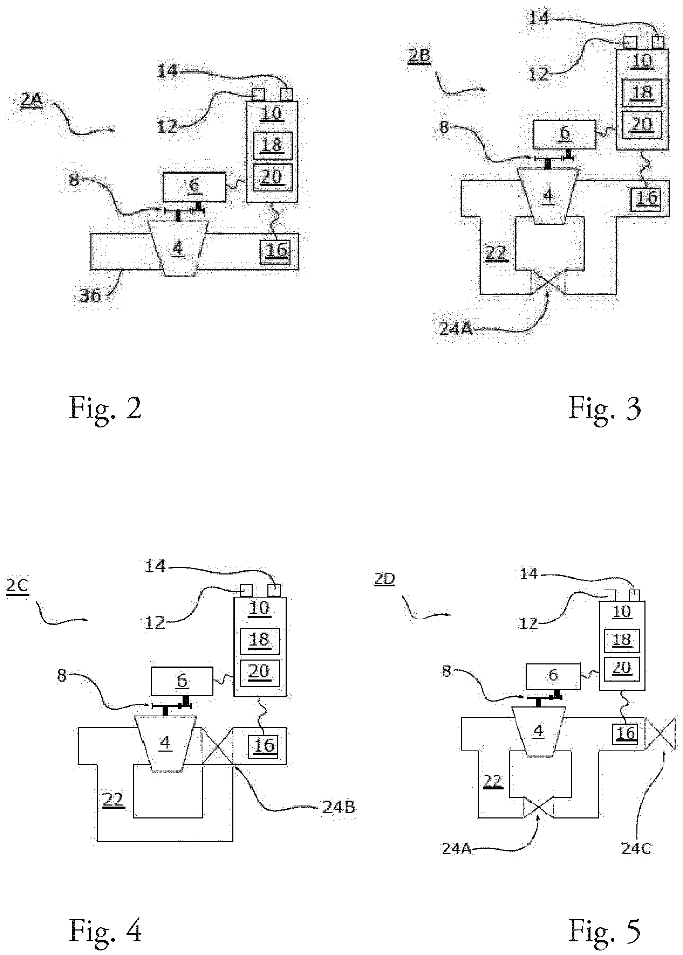

Dans ce premier mode de réalisation, un système d'alimentation 2A est ménagé sur la conduite d'admission 36, tel que cela est illustré plus en détail sur la figure 2.

Le système d'alimentation 2A comprend un compresseur volumétrique 4 agencé de sorte à pouvoir modifier la pression d'un gaz circulant dans la conduite d'admission. Le compresseur volumétrique peut être de plusieurs types, et notamment de type à palettes, à membranes, ou encore de type à spirales ou à lobes, sans sortir du contexte de l'invention. Le compresseur volumétrique 4 est couplé à une machine d'entraînement réversible 6, ici par l'intermédiaire d'un engrenage 8. La machine d'entraînement réversible 6 est configurée pour fonctionner comme moteur électrique pour entraîner le compresseur volumétrique, lorsqu'elle est alimentée en courant électrique, ou bien comme générateur électrique lorsque le compresseur volumétrique entraîne la machine d'entraînement réversible. De la sorte, le compresseur volumétrique 4 et la machine d'entraînement réversible 6 forment un ensemble d'apport et de récupération d'énergie, apte à fonctionner dans un premier ou dans un deuxième mode de fonctionnement selon la pression du gaz amené à traverser le compresseur dans cette conduite d'admission. On comprend que dans l'exemple illustré, l'engrenage 8 utilisé pour le couplage du compresseur volumétrique 4 et de la machine d'entraînement réversible 6 permet une réduction de vitesse, et plus particulièrement ici une réduction de la vitesse de la machine d'entraînement réversible vers le compresseur, mais que l'on pourrait sans sortir du contexte de l'invention coupler directement le compresseur volumétrique et la machine d'entraînement réversible.

Le fonctionnement de la machine d'entraînement réversible 6 est contrôlé par une unité de commande 10 dédiée.

Dans l'exemple illustré, la machine d'entraînement réversible 6 est une machine électrique. L'unité de commande comporte une première borne 12 reliée à la masse et une deuxième borne 14 reliée à une source d'alimentation électrique, et par exemple une batterie 52 tel qu'illustré sur la figure 1. Suivant le mode de fonctionnement choisi, l'unité de commande permet d'alimenter en courant la machine d'entraînement réversible en déchargeant la batterie, ou de recharger à partir du courant produit par la machine d'entraînement réversible 6 la batterie, ou tout autre dispositif de stockage électrique.

Selon l'invention, un premier mode de fonctionnement consiste, en cas de pression de gaz insuffisante, à pallier cette insuffisance en comprimant le gaz dans le système d'alimentation 2A, et un deuxième mode de fonctionnement consiste, lorsque la pression de gaz est supérieure à celle souhaitée dans le répartiteur d'admission, à recharger la batterie 52. Il est également à noter que l'invention permet de s'affranchir de l'utilisation d'un boîtier papillon dans la conduite d'admission 34 du fait de la capacité de la machine d'entraînement réversible à faire varier graduellement la pression dans le système d'alimentation 2 par l'intermédiaire du compresseur volumétrique 4.

L'unité de commande 10 est connectée à un élément de détection 16, ici un capteur de pression agencé dans la conduite d'admission, de sorte à permettre à l'unité de commande de mesurer en temps réel un paramètre relatif au gaz présent dans le système d'alimentation, à savoir ici la pression de ce gaz. Dans l'exemple illustré, le capteur de pression est placé dans la conduite d'admission en aval du compresseur volumétrique, le terme « aval » étant utilisé en référence au sens d'écoulement du gaz dans la conduite d'admission. Bien entendu, sans sortir du contexte de l'invention, le capteur de pression pourrait être placé dans la conduite d'admission en amont du compresseur volumétrique. Par ailleurs, et tel que cela a pu être précisé précédemment, l'élément de détection pourrait prendre une autre forme que celle du capteur de pression décrit.

L'unité de commande 10 intègre également un calculateur 18 et une unité de mémorisation 20. Plusieurs valeurs seuils peuvent être préalablement enregistrées dans l'unité de mémorisation 20. À chaque valeur seuil est associé un mode de fonctionnement différent de la machine d'entraînement réversible 6 afin de permettre au compresseur volumétrique de compresser à des valeurs de pression différentes un gaz circulant dans la conduite d'admission.

On comprend que la configuration de l'unité de commande est donnée ici à titre d'exemple non limitatif. Certaines des fonctions nécessaires au pilotage de l'ensemble d'apport et de récupération d'énergie peuvent être assurées par exemple par le calculateur du moteur thermique.

Tel que cela a pu être précisé précédemment, l'unité de commande 10 est configurée pour faire fonctionner la machine d'entraînement réversible 6 selon deux modes de fonctionnement différents, en fonction des valeurs des mesures réalisées par l'élément de détection 16, ici un capteur de pression.

Lorsque la pression mesurée par le capteur de pression est identifiée par le calculateur 18 comme étant inférieure à une première valeur seuil, ce qui est révélateur d'une pression insuffisante du gaz amené à entrer dans le collecteur d'admission du moteur, l'unité de commande 10 alimente en courant la machine d'entraînement réversible 6, dans un premier mode de fonctionnement. De la sorte, la machine d'entraînement réversible entraîne en rotation le compresseur volumétrique 4 et celui-ci fonctionne pour augmenter la pression du gaz s'écoulant dans conduite d'admission 36.

Dans un second mode de fonctionnement, lorsque la pression mesurée par le capteur de pression 16 est identifiée par le calculateur 18 comme étant supérieure à cette même première valeur seuil, ou à une seconde valeur seuil supérieure à la première valeur seuil, ce qui est révélateur d'une pression suffisante voir excessive du gaz amené à traverser le compresseur volumétrique, l'unité de commande 10 dirige le courant électrique produit par la machine d'entraînement réversible 6 afin d'alimenter le dispositif de stockage et plus particulièrement ici la batterie 52.

Il est à noter que l'unité de commande 10 est également configurée pour donner une instruction de commande au compresseur volumétrique 4 de manière à empêcher, ou au moins de manière à limiter, la circulation d'un gaz dans la conduite d'admission 36, le compresseur volumétrique 4 étant alors utilisé comme une vanne obturant complètement, ou partiellement, le système d'alimentation 2.

On va maintenant décrire trois variantes du système d'alimentation, en référence aux figures 3 à 5, qui peuvent être mises en oeuvre dans le moteur à combustion interne décrit en référence à la figure 1. Il est à noter que les éléments identiques ou similaires entre les différentes variantes de l'invention sont désignés par les mêmes références sur les figures ci-jointes.

Plus particulièrement, la variante de la figure 3 diffère de ce qui précède en ce que le système d'alimentation 2B comprend un circuit de dérivation 22 permettant à au moins une partie d'un gaz circulant dans la conduite d'admission 36 de ne pas passer par le compresseur volumétrique 4. Le circuit de dérivation 22 comprend une vanne 24A permettant de contrôler le débit de gaz d'échappement passant par le circuit de dérivation 22.

La figure 4 illustre une deuxième variante, dans laquelle là encore le système d'alimentation 2C comprend un circuit de dérivation 22 permettant à au moins une partie d'un gaz circulant dans la conduite d'admission de ne pas passer par le compresseur volumétrique 4. Dans cet exemple, le système d'alimentation 2 comprend une vanne 24B de type trois voies permettant de contrôler le débit de gaz passant par le compresseur volumétrique 4 et/ou le circuit de dérivation 22. Il est à noter que la vanne trois voies peut être positionnée en amont ou bien en aval du circuit de dérivation 22.

La figure 5 illustre une troisième variante, dans laquelle le système d'alimentation comprend un circuit de dérivation 22 permettant à au moins une partie d'un gaz circulant dans le système d'alimentation 2 de ne pas passer par le compresseur volumétrique 4, et dans laquelle deux vannes sont agencées. Une vanne 24A est disposé dans le circuit de dérivation 22 pour contrôler le débit de gaz d'échappement passant par le circuit de dérivation 22 et une vanne 24C est disposée dans la conduite d'admission 36, en aval du circuit de dérivation 22.

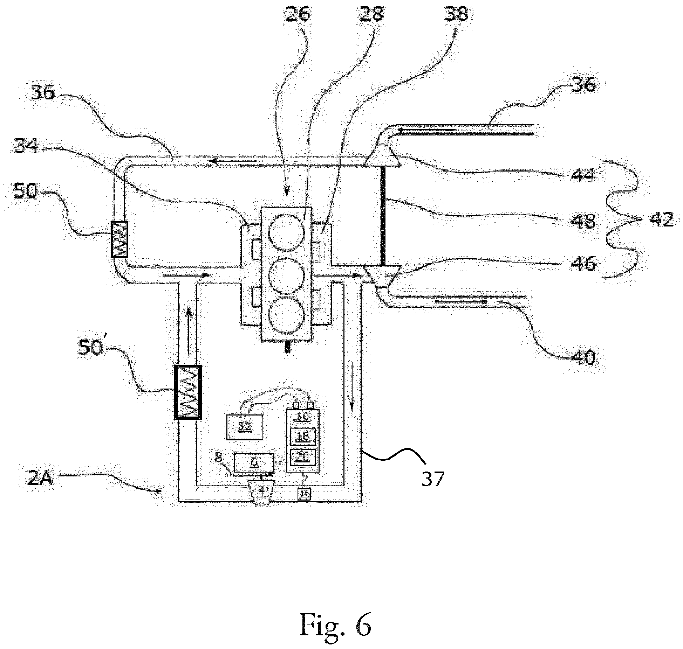

La figure 6 illustre un deuxième mode de réalisation de l'invention, dans lequel un moteur à combustion interne 26 comporte un système d'alimentation 2A, et qui diffère de ce qui précède par la position de l'ensemble d'apport et de récupération d'énergie. Plus particulièrement, le compresseur volumétrique 4 et la machine d'entraînement réversible 6 sont disposés sur une conduite de recirculation 37 des gaz d'échappement.

Dans l'exemple illustré sur la figure 6, la conduite de recirculation 37 est une conduite dite haute pression car le prélèvement des gaz d'échappement est effectué en amont de la turbine du turbocompresseur 42. De même que précédemment, le compresseur volumétrique 4 couplé avec la machine d'entraînement réversible 6 permet d'augmenter ou bien de récupérer l'énergie des gaz d'échappement circulant dans la conduite de recirculation 37, sans qu'il soit pour cela nécessaire d'intégrer une turbine et un compresseur sur ledit conduit. La conduite de recirculation de gaz haute pression est ici munie d'un échangeur thermique 50' en aval du compresseur volumétrique 4. Il est à noter que le compresseur volumétrique peut également être configuré pour jouer le rôle de la vanne EGR de manière à limiter le coût et l'encombrement de la conduite de recirculation.

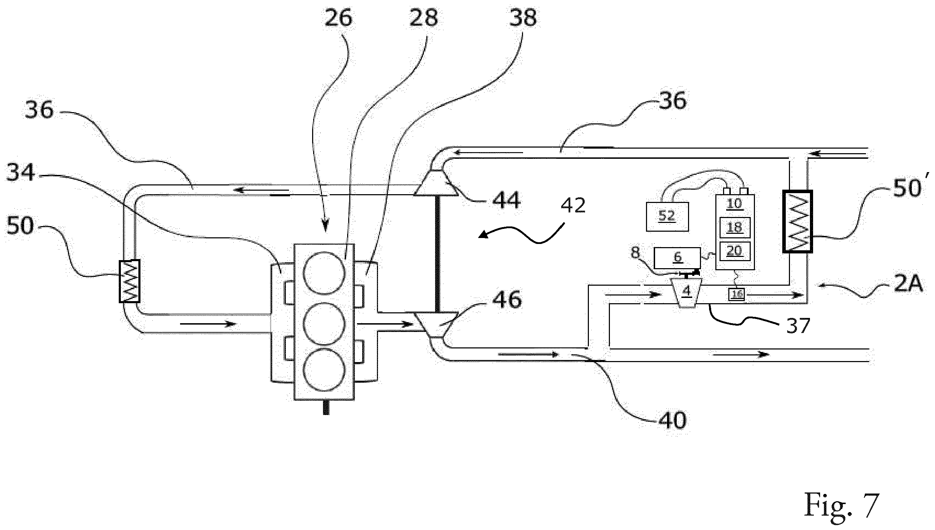

La figure 7 illustre un troisième mode de réalisation qui diffère du deuxième mode de réalisation en le positionnement de l'ensemble d'apport et de récupération d'énergie. Plus particulièrement, le compresseur volumétrique 4 et la machine d'entraînement réversible 6 sont disposés sur une conduite de recirculation 37 des gaz d'échappement dite basse pression, en aval de la turbine 46 du turbocompresseur 42, étant entendu que ce troisième mode de réalisation offre les mêmes avantages que ceux mentionnés ci-dessus. Par ailleurs, il convient de noter que, dans le cas d'application de l'invention avec un circuit de recirculation des gaz d'échappement basse pression, on pourra se passer d'une vanne de contre pression ou d'un volet d'admission pour créer la différence de pression pour faire circuler le débit EGR voulu, alors que cette vanne, ou ce volet, est nécessaire avec ces circuits basse pression s'ils ne sont pas équipés d'un ensemble d'apport et de récupération d'énergie tel que décrit précédemment.

Il est à noter que dans les deuxième et troisième modes de réalisation décrits ci-dessus, un système d'alimentation selon l'une ou l'autre des variantes précédemment décrites pourra être utilisé.

Par ailleurs, dans un mode de réalisation non représenté, on pourra prévoir de combiner la présence d'un premier ensemble d'apport et de récupération d'énergie sur la conduite d'admission et d'un deuxième ensemble d'apport et de récupération d'énergie sur la conduite de recirculation de gaz d'échappement. Dans un tel mode de réalisation, il est avantageux, dans le premier mode de fonctionnement, d'actionner le compresseur volumétrique du deuxième ensemble d'apport et de récupération d'énergie afin rendre possible la recirculation des gaz dans un contexte où la pression en sortie de la conduite de recirculation de gaz est supérieure à la pression en entrée .

Les différents modes de réalisation de l'invention décrits ci-dessus permettent avantageusement d'optimiser le fonctionnement d'un ensemble d'alimentation en gaz pour un moteur à combustion interne tout en limitant son encombrement. En effet, le compresseur volumétrique couplé avec la machine d'entraînement réversible permet d'augmenter la pression ou bien de récupérer l'énergie d'un gaz circulant dans cet ensemble d'alimentation, sans qu'il soit pour cela nécessaire d'intégrer une turbine, et sa machine d'entraînement associée, et un compresseur et sa machine d'entrainement associée, et leurs modules de commande associés, sur une même conduite en deux zones de raccordement distinctes. Le système d'alimentation selon l'invention est donc plus économique et plus compact par rapport à l'état de la technique.

## Revendications

1. Système d'alimentation (2A, 2B, 2C, 2D) en gaz pour un moteur à combustion interne (26), comprenant un ensemble d'apport et de récupération d'énergie formé d'un compresseur volumétrique (4) et d'une machine d'entraînement réversible (6), la machine d'entraînement réversible étant configurée pour, dans un premier mode de fonctionnement, actionner le compresseur volumétrique (4) afin d'augmenter la pression d'un gaz présent dans le système d'alimentation (2A, 2B, 2C, 2D) et pour, dans un second mode de fonctionnement, convertir l'énergie du compresseur volumétrique (4) acquise par la détente d'un gaz présent dans le système d'alimentation (2A, 2B, 2C, 2D).

2. Système d'alimentation (2A, 2B, 2C, 2D) selon la revendication 1, **caractérisé en ce qu'**il comprend une unité de commande (10) contrôlant le fonctionnement de la machine d'entraînement réversible (6), l'unité de commande (10) étant connectée à un ou plusieurs éléments de détection (16), de manière à mesurer un paramètre relatif au gaz présent dans le système d'alimentation (2A, 2B, 2C, 2D), l'unité de commande étant notamment configurée pour commander la machine d'entraînement réversible en fonction de la comparaison d'un paramètre mesuré par le ou les éléments de détection avec une valeur seuil, de manière à faire fonctionner le compresseur volumétrique dans le premier mode de fonctionnement, l'unité de commande (10) intégrant de préférence une unité de mémorisation (20) d'au moins une valeur seuil, à laquelle est associé un état de fonctionnement spécifique du compresseur volumétrique (4).

3. Système d'alimentation (2A, 2B, 2C, 2D) selon la revendication 2, **caractérisé en ce que** l'unité de commande (10) est configurée pour donner une instruction de commande du compresseur volumétrique (4) de manière à empêcher la circulation d'un gaz dans le système d'alimentation (2A, 2B, 2C, 2D).

4. Système d'alimentation (2A, 2B, 2C, 2D) selon l'une des revendications précédentes, **caractérisé en ce qu'**il comprend une conduite de recirculation (37) des gaz d'échappement pour moteur à combustion interne sur laquelle est agencé l'ensemble d'apport et de récupération d'énergie.

5. Système d'alimentation (2A, 2B, 2C, 2D) selon l'une des revendications 1 à 3, **caractérisé en ce qu'**il comprend une conduite d'admission (36) des gaz pour moteur à combustion interne sur laquelle est agencé l'ensemble d'apport et de récupération d'énergie.

6. Système d'alimentation (2A, 2B, 2C, 2D) selon l'une des revendications 1 à 3, **caractérisé en ce qu'**il comprend une conduite de recirculation (37) des gaz d'échappement pour moteur à combustion interne sur laquelle est agencé un premier ensemble d'apport et de récupération d'énergie et **en ce qu'**il comprend une conduite d'admission (36) des gaz pour moteur à combustion interne sur laquelle est agencé un deuxième ensemble d'apport et de récupération d'énergie.

7. Système d'alimentation (2A, 2B, 2C, 2D) selon l'une des revendications 1 à 6, **caractérisé en ce que** la machine d'entraînement réversible (6) est configurée pour fonctionner avec un système hydraulique ou pneumatique.

8. Système d'alimentation (2B, 2C, 2D) selon l'une des revendications précédentes, **caractérisé en ce qu'**il comprend un circuit de dérivation (22) permettant à au moins une partie des gaz circulant dans le système d'alimentation (2B, 2C, 2D) d'éviter le compresseur volumétrique (4), le circuit de dérivation (22) comprenant une vanne (24A, 24B) permettant de contrôler le débit des gaz passant par le circuit de dérivation (22).

9. Système d'alimentation (2C) selon l'une des revendications 1 à 7, **caractérisé en ce qu'**il comprend un circuit de dérivation (22) permettant à au moins une partie des gaz circulant dans le système d'alimentation (2C) d'éviter le compresseur volumétrique (4), et une vanne (24B) de type 3 voies permettant de contrôler le débit des gaz passant par le compresseur volumétrique (4) et/ou le circuit de dérivation (22).

10. Moteur à combustion interne (26) comprenant un système d'alimentation (2A, 2B, 2C, 2D) en gaz selon l'une des revendications précédentes.
